# EUROPÄISCHE PATENTSCHRIFT

(11) **EP 1 228 681 B1**
(45) Veröffentlichungstag und Bekanntmachung des Hinweises auf die Patenterteilung: **20.04.2005**
(21) Anmeldenummer: 02002415.4
(22) Anmeldetag: 01.02.2002
(51) Int. Cl.: A01D 69/02

(54) **Mähgerät**
Mowing apparatus
Appareil faucheur

(30) Priorität: 06.02.2001 US 777815
(43) Veröffentlichungstag der Anmeldung: 07.08.2002
(73) Patentinhaber: DEERE & COMPANY, Moline, Illinois 61265-8098 (US)
(72) Erfinder: Hunt, Kenneth Edward, Oconomowoc, WI 53066 (US)
(74) Vertreter: Magin, Ludwig Bernhard

(56) Entgegenhaltungen:
- WO-A-97/28681
- DE-A- 1 507 185
- DE-A- 10 027 531
- DE-U- 29 509 472
- US-A- 5 794 422

## Beschreibung

Die Erfindung betrifft ein Mähgerät, insbesondere einen Rasenmäher, mit einem Verbrennungsmotor, einem Generator, wenigstens einer Schneideinheit, und mehreren Rädern, wobei die Schneideinheit durch den Verbrennungsmotor und wenigstens ein Rad durch einen Elektromotor antreibbar ist.

Die DE-A1-100 27 53 zeigt ein automatisch oder mittels Fernbedienung steuerbares Bodenbearbeitungsgerät in der Art eines Rasenmähers mit einem Verbrennungsmotor, welcher einen Messerbalken und darüber hinaus einen Generator antreibt. Dieser Generator liefert über einen Stromkreis elektrische Energie an Motoren, welche Räder des Geräts antreiben, um dieses fortzubewegen.

Das der Erfindung zugrunde liegende Problem wird darin gesehen, dass der Verbrennungsmotor eines solchen Mähgeräts betrieben werden muss, um das Mähgerät fortzubewegen.

Dieses Problem wird erfindungsgemäß durch die Lehre des Patentanspruchs 1 gelöst, wobei in den weiteren Patentansprüchen die Lösung in vorteilhafter Weise weiterentwickelnde Merkmale aufgeführt sind.

Auf diese Weise wird ein Mähgerät zur Verfügung gestellt, dessen Fortbewegung nicht von dem Betriebszustand des Verbrennungsmotors abhängig ist. Unabhängig davon, ob der Verbrennungsmotor betrieben wird oder abgeschaltet ist, liefert die Speichereinheit elektrische Energie an die Elektromotoren, welche die Räder antreiben, die das Mähgerät über den Untergrund fortbewegen. Der Antrieb der Schneideinheit hingegen erfolgt durch den Verbrennungsmotor, da die Schneideinheit größere Anforderungen an die Leistung des sie antreibenden Motors stellt. Die Räder können somit durch die Elektromotoren auch dann angetrieben werden, wenn der Verbrennungsmotor nicht betrieben wird. Dies ist insbesondere dann vorteilhaft, wenn das Mähgerät nur zum Transport oder Standortwechsel fortbewegt werden soll, ohne das ein Betrieb der Schneideinheit notwendig oder gewünscht ist. Es werden dann nur geringe Geräuschemissionen abgegeben, da nur die Elektromotoren arbeiten und weder der Verbrennungsmotor betrieben wird noch die Schneideinheit rotiert und somit auch der durch diese im Betrieb erzeugte erhebliche Luftschall wegfällt. Da die elektrische Speichereinheit durch den Generator, der durch den Verbrennungsmotor betrieben wird, aufgeladen werden kann, erhöht sich der Aktionsradius bzw. die maximale Betriebsdauer das Mähgeräts. Dies insbesondere auch deshalb, da der hohe Leistungsanforderungen stellende Antrieb der Schneideinheit durch den Verbrennungsmotor und somit unabhängig von der elektrischen Speichereinheit erfolgt. Ein Aufladen der elektrischen Speichereinheit mittels einer stationären bzw. von dem Mähgerät unabhängigen Ladestation bzw. einem Netzanschluss ist weniger häufig notwendig, wodurch das Mähgerät flexibler und/oder auch für größere Flächen einsetzbar ist.

Die Schneideinheit kann in der Art eines Mäh- bzw. Messerbalkens oder auch einer Mähspindel ausgeführt sein. Bei dem Messerbalken kann es sich um einen üblichen Messerbalken mit zwei Schneidkanten handeln. Es ist aber auch der Einsatz von Messerbalken mit mehr als zwei Schneidkanten oder auch von speziell ausgebildeten Mulcheinrichtungen oder Mulchmessern denkbar. Der Antrieb der Schneideinheit durch den Verbrennungsmotor ist insbesondere auch dann günstig, wenn der Mähbalken mit Einrichtungen versehen ist, die einen Luftstrom erzeugen, der geschnittene oder auch zu schneidende Pflanzen ansaugt oder fördert. Hierzu sind Messerbalken und insbesondere als Mulchmesser ausgebildete Messerbalken häufig mit Flügeln versehen. Eine solche Ausführung wiederum erfordert eine höhere Leistung des sie antreibenden Motors. Neben dem Mähbalken können auch weitere Arbeitseinheiten, wie ein Gebläse, eine zusätzliche Mulcheinrichtung, Vertikutiereinrichtungen etc. durch den Verbrennungsmotor betrieben werden.

Insbesondere bei einem Einsatz einer oder auch mehrerer Mähspindeln , aber auch dann, wenn der Verbrennungsmotor nicht in unmittelbarer Nähe der Schneideinheit vorgesehen ist, kann der Verbrennungsmotor mit einem hydrostatischen Antrieb zusammenwirken, welcher wiederum eine oder mehrere Schneideinheiten antreibt. Hierzu treibt der Verbrennungsmotor eine Hydraulikpumpe an, welche mit wiederum die Schneideinheit(en) antreibenden Hydraulikmotoren zusammenwirk(t)en.

Ein Mähgerät entsprechend der vorliegenden Erfindung kann durch eine Bedienungsperson über einen Griff oder Holm etc. geführt werden. Besonders günstig ist es aber, wenn das Mähgerät selbsttätig, beispielsweise in der Art eines Mähroboters, oder auch ferngesteuert arbeitet.

Das Mähgerät kann eine Steuereinheit aufweisen, welche mit dem Rad und der elektrischen Speichereinheit zusammenwirkt. Über die Steuereinheit kann beispielsweise die Geschwindigkeit, Drehrichtung etc. des Rades oder die Drehgeschwindigkeit, Drehrichtung oder das Drehmoment des das Rad antreibenden Elektromotors oder des Hydraulikantriebs gesteuert werden. Da die Steuereinheit mit der elektrischen Speichereinheit verbunden ist, ist ihr Betrieb von dem Verbrennungsmotor als solchem unabhängig.

Wirkt die Steuereinheit mit einem fernsteuerbaren und/oder selbsstätigen Lenksystem zusammen, so ist ein autonomer oder ferngesteuerter Betrieb des Mähgeräts möglich, wobei dessen Fahr- und Mähfunktionen durch die Steuereinheit gesteuert werden können. Hierzu können an dem Mähgerät Sensoren vorgesehen sein oder die Steuereinheit kann mit externen Sensoren zusammenwirken, die es ermöglichen, dass das Mähgerät Hindernissen ausweicht und/oder nur in einem vorbestimmten Gebiet arbeitet.

Es ist denkbar, dass eine solche Steuereinheit nur auf ein Rad wirkt. Eine größere Beweglichkeit des Mähgeräts ergibt sich aber, wenn zwei oder mehr Räder des Mähgeräts gesteuert werden, so dass beispielsweise ein Drehen des Mähgeräts auf der Stelle möglich wird, ohne dass es zu einer Beschädigung der Grasnarbe durch nicht gelenkte/gesteuerte Räder kommt.

Die elektrische Speichereinheit kann durch eine Batterie oder auch einen aus mehreren Einzelbatterien bestehenden Batteriepack gebildet werden. Die Batterien oder auch Akkumulatoren sind wiederaufladbar vorgesehen. Es ist aber auch denkbar, dass für einen Notbetrieb nicht wiederaufladbare Batterien in das Mähgerät eingesetzt werden können, welche dann allerdings nicht mit dem Generator zu verbinden sind.

Ist zwischen dem Verbrennungsmotor und der Schneideinheit eine Kupplungseinrichtung vorgesehen, so kann der Verbrennungsmotor von der Schneideinheit getrennt werden, so dass die Schneideinheit zu- bzw. abgeschaltet werden kann, ohne dass der Betriebszustand des Verbrennungsmotors verändert werden muss. Auf die Schneideinheit kann darüber hinaus eine Messerbremse wirken, die das Messer stilllegt, wenn es von dem Verbrennungsmotor getrennt wird, so dass es nicht unkontrolliert weiterrotiert.

Es kann vorgesehen sein, dass auch der Betrieb bzw. das Ein- und Ausrücken der Kupplungseinrichtung durch die Steuereinheit gesteuert wird. Es ist aber auch ein von dieser unabhängiger Betrieb bzw. eine unabhängige Steuerung denkbar.

An dem Mähgerät kann eine einzelne Schneideinheit vorgesehen sein. Mähgeräte, welche zur Bearbeitung größerer Flächen gedacht sind, weisen häufig zwei oder mehr Schneideinheiten in einem oder mehreren Gehäuse(n) auf, um eine größere Schnittbreite zu erzielen. Ein Antrieb mehrerer Schneideinheiten durch den Verbrennungsmotor kann über ein Getriebe erfolgen. Beispielsweise kann hierzu ein einfach zu handhabender und leicht zu wartender Riemenantrieb vorgesehen sein.

In der Zeichnung ist ein nachfolgend näher beschriebenes Ausführungsbeispiel der Erfindung dargestellt. Es zeigt:
- Fig. 1: eine perspektivische Darstellung eines selbsttätigen Mähgeräts mit einem Mähbalken, welches zur Darstellung seines Antriebssystems teilweise aufgebrochen dargestellt ist,
- Fig. 2: eine schematische Darstellung des Antriebssystems entsprechend Fig. 1,
- Fig. 3: eine perspektivische Darstellung eines Bereichs eines selbsttägigen Mähgeräts mit einem elektrischen Radantriebssystem und durch einen Verbrennungsmotor antreibbaren Mähbalken und
- Fig. 4.: eine Ansicht des Mähgeräts aus Fig. 3 von vorn betrachtet, wobei dieses bereichsweise aufgebrochen ist, damit die Antriebsbauteile besser dargestellt werden können.

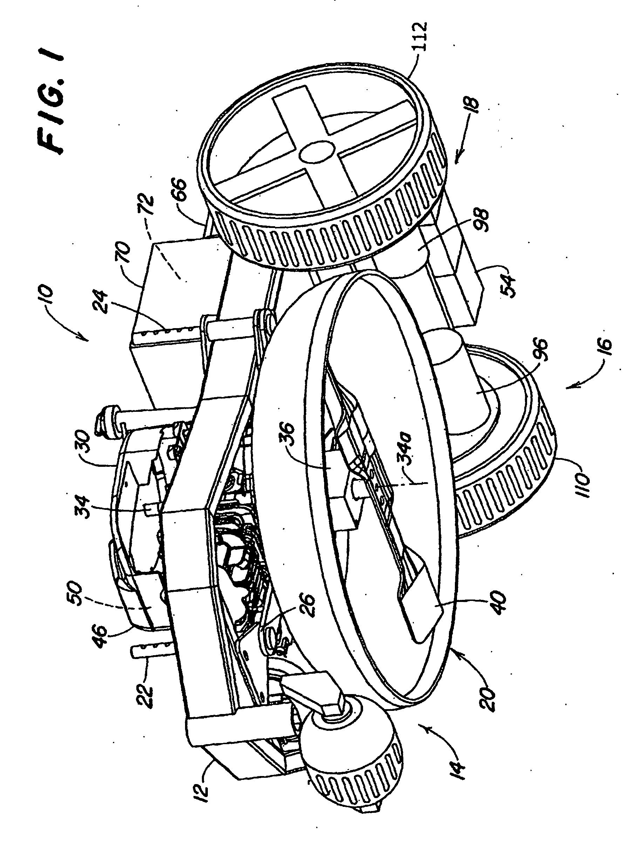

Es wird nun auf Fig. 1 Bezug genommen, in der ein selbstfahrendes Mähgerät 10 gezeigt wird, welches einen Rahmen 12 aufweist, der sich auf dem Untergrund über einen vorderen Freilaufradzusammenbau bzw. ein Freilaufrad 14 und über rückwärtige elektrisch antreibbare Radzusammenbauten 16 und 18 abstützt. Ein konventionelles Mähwerk, welches allgemein mit 20 bezeichnet wird, wird durch den Rahmen 12 über quer beabstandete Halterungen, von denen eine bei 24 gezeigt wird, und über ein vorderes Gestänge, von dem ein Bereich bei 26 dargestellt ist, verstellbar getragen, so dass das Mähwerk 20 zwischen einer Arbeitsstellung und einer Transportstellung und zur Veränderung der Schnitthöhe des Mähwerks 20, wenn es sich in der Arbeitsstellung befindet, bewegt werden kann.

Ein Verbrennungsmotor 30 ist auf dem Mähwerk 20 angeordnet und weist eine vertikale Antriebswelle 34 auf, welche über eine Messerbremse (BBC) 36 mit einem mit Flügeln versehenen Mähbalken 40 verbunden ist, um den Mähbalken 40 um eine Achse 34a der Antriebswelle 34 zu drehen. Alternativ könnte der Mähbalken 40 direkt mit einem unteren Endbereich der Antriebswelle 34 verbunden sein und ein Motorabschaltkreis verwendet werden, um den Verbrennungsmotor 30 abzustellen und eine Rotation des Messerbalkens 40 zu beenden.

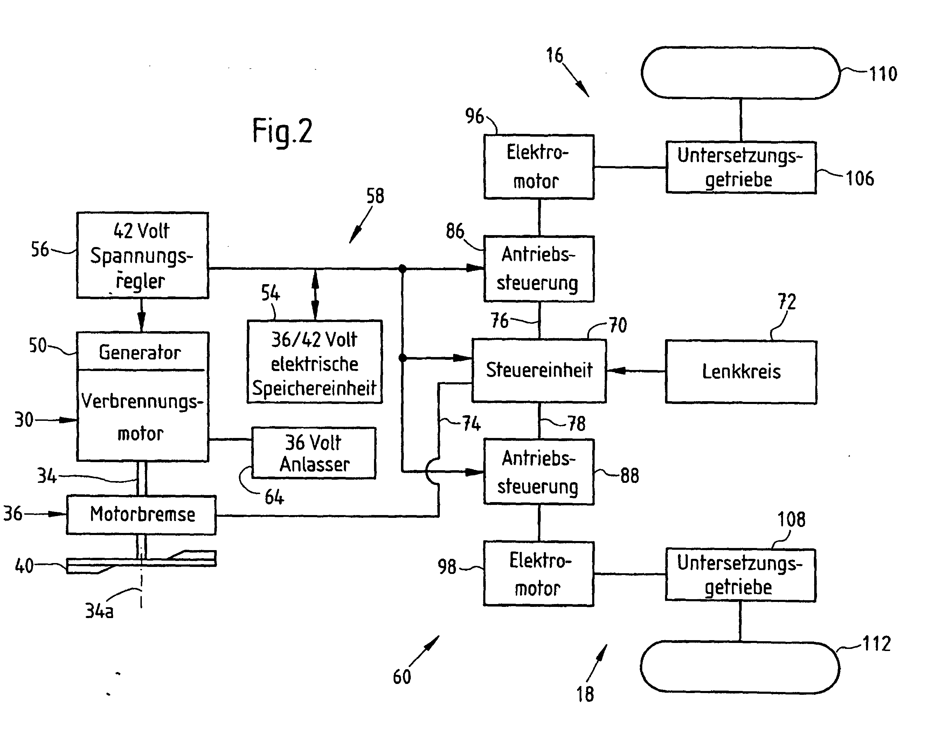

In einem oberen Motorgehäuse 46 ist ein elektrischer Generator 50, vorzugsweise eine Lichtmaschine bzw. ein Wechselstromgenerator, vorgesehen, der durch den Verbrennungsmotor 30 angetrieben wird und mit einem Batteriepack, einer Batterie bzw. einer elektrischen Speichereinheit 54 (Fig. 2) über einen Spannungsregler 56 verbunden ist. Der Generator 50 und die Speichereinheit 54 definieren eine elektrische Energiequelle 58, welche auch mit einem elektrischen Antriebs- und Navigationssystem bzw. einem Lenksystem verbunden ist, welches in Fig. 2 allgemein mit 60 bezeichnet wird. Ein elektrischer Anlasser 64 ist mit dem Verbrennungsmotor 30 verbunden, um den Verbrennungsmotor 30 beim Anlassen anzuwerfen. Die elektrische Speichereinheit 54 stellt eine Nennspannung zur Verfügung, welche vorzugsweise in einem Bereich von ungefähr 12 bis 42 Volt liegt, und ist an dem Rahmen 12 hinter den rückwärtigen, antreibbaren Radzusammenbauten 16 und 18 angeordnet. Hinter dem Verbrennungsmotor 30 ist ein Kraftstofftank 66 vorgesehen.

Das Lenksystem 60 weist eine Steuereinheit 70 (Fig. 2) auf, welche mit der Energiequelle 58 und einem Navigations- und Hindernisserkennungsschaltkreis oder Lenkkreis 72 verbunden ist, um eine Mähgerätssteuerung zur Verfügung zu stellen. Die Steuereinheit 70 weist auch einen Ausgang 74 auf, welcher mit der Motorbremse 36 zur Steuerung des Bremsens, Einrückens und Ausrückens des Mähbalkens 40 in Verbindung steht. Radantriebssteuerungsausgänge oder Steuerausgänge 76 und 78 der Steuereinheit 70 ermöglichen jeweils eine Steuerung der einzelnen Radantriebszusammenbauten 16 und 18. Der Lenkkreis 72 weist vorzugsweise konventionelle Berührungssensoren, Ultraschallsensoren und/oder Infrarotsensoren zur Vermeidung von Hindernissberührungen, und ein konventionelles Navigationssystem wie ein Satellitenortungssystem (GPS), ein Ultraschallsystem oder ein Lasersichtsystem auf. Es soll deutlich werden, dass die vorliegende Erfindung mit vielen verschiedenen Arten von Navigations- und Hindernisserkennungsschaltkreisen einschließlich einer Fernbedienung durch eine Bedienungsperson verwendet werden kann und diese speziellen Arten nur beispielhaft angegeben werden.

Die antreibbaren Radzusammenbauten 16 und 18 weisen elektrische Antriebssteuerungskreise bzw. Antriebssteuerungen 86 und 88 (Fig. 2) auf, welche mit der elektrischen Energiequelle 58 verbunden sind und Ausgangsanschlüsse aufweisen, welche mit Elektromotoren 96 und 98 verbunden sind. Die Ausgangsanschlüsse der einzelnen Antriebssteuerungen 86 und 88 und somit die Richtung, Geschwindigkeit und das Drehmoment der einzelnen Elektromotoren 96 und 98 hängen von den Steuerausgängen 76 und 78 ab. Die Polarität, Spannung, der Arbeitszyklus und/oder die Spannung des Ausgangs der Antriebssteuerungskreise 86 und 88 kann verändert werden, um die gewünschte Steuerung zur Verfügung zu stellen. Untersetzungsgetriebe 106 und 108 verbinden die Elektromotoren 96 und 98 mit antreibbaren Rädern 110 und 112, um das Mähgerät 10 unter Leitung der Steuereinheit 70 und des Lenkkreises 72 anzutreiben. Die Steuereinheit 70 und der Lenkkreis 72 steuern auch das Einrücken und Ausrücken des Antriebs des Messerbalkens 40.

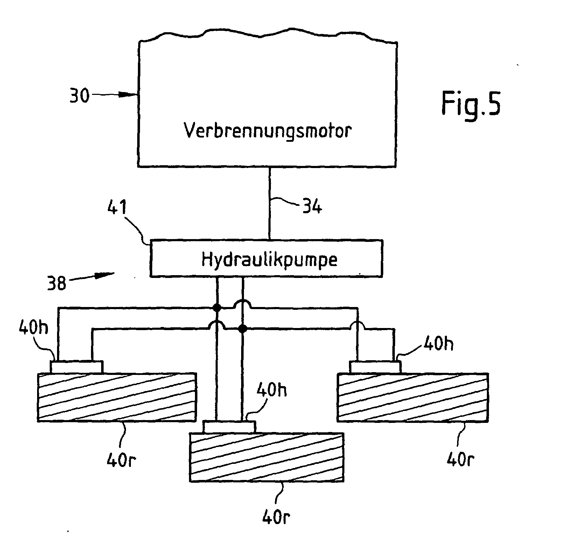

Anhand des oben beschriebenen Systems kann eingeschätzt werden, dass der Antrieb des Mähbalkens 40 direkt durch den Verbrennungsmotor 30 zur Verfügung gestellt wird. Sollte es gewünscht sein, kann der Antrieb des Mähbalkens 40 oder der Mähbalken durch einen motorgetriebenen Hydraulikantrieb, wie einem hydrostatischen Antrieb 38, wie er schematisch in Fig. 5 dargestellt ist, erzielt werden. Wenn die Schneidfunktion beispielsweise durch mehrere Spindeln 40r bewirkt wird, kann der Antrieb durch Hydraulikmotoren 40h, welche mit den Spindeln 40r verbunden sind und durch eine Hydraulikpumpe 41 angetrieben werden, welche mit der Antriebswelle 34 des Verbrennungsmotors 30 verbunden ist, zur Verfügung gestellt werden. Daher können Mähbalken mit höheren Leistungsanforderungen und einer besseren Schneid- und Förderkapazität, wie Messerbalken mit Flügeln 40, wie in den dargestellten Figuren, oder mehrere Spindeln 40r, wie in Fig. 5 gezeigt, verwendet werden, da die Einschränkungen eines Elektroantriebs vermieden wird. Darüber hinaus liegen der Antrieb und die Lenkung des Mähgeräts 10 unter der Steuerung der Steuereinheit 70 und des Lenkkreises 72. Der Antrieb des Mähbalkens 40 ist nicht mit dem Verbrennungsmotor 30 sondern mit einer elektrischen Energiequelle 58 verbunden um eine bequemere und weniger teuere und komplexe Geschwindigkeits-, Richtungs- und Lenkungssteuerung zu ermöglichen, als diese an anderen Arten von Antriebssystemen einschließlich mancher Hybridsysteme, welche den Antrieb mit den Rädern verbinden, benötigt werden.

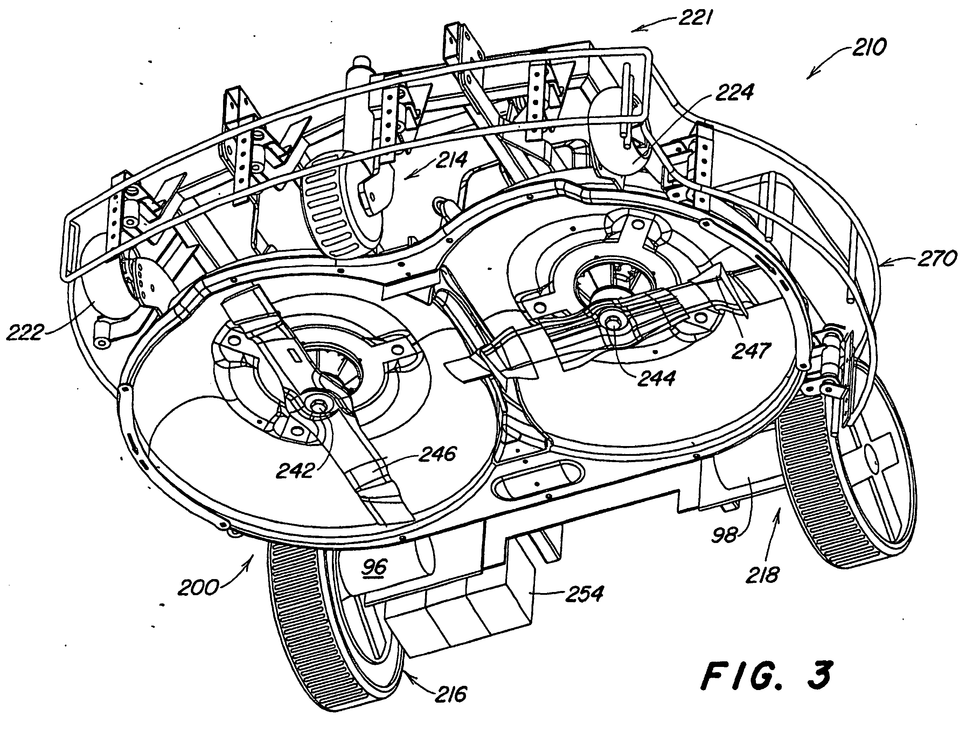

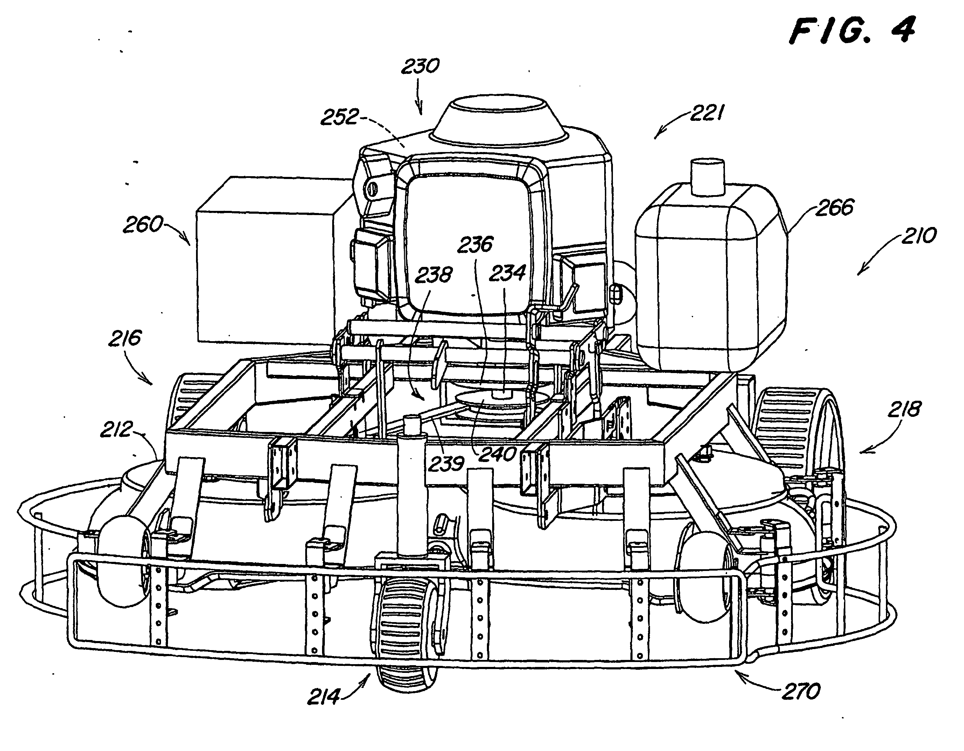

Es wird nun auf die Fig. 3 und 4 Bezug genommen, in denen eine alternative Ausführungsform der Erfindung mit einer Schneideinheit mit mehreren Messerbalken, welche direkt durch einen Motor angetrieben werden, gezeigt wird. Ein selbstfahrendes Mähgerät 210 weist einen Rahmen 212 (teilweise aufgeschnitten dargestellt) auf, welcher sich auf dem Untergrund über einen vorderen Freilaufzusammenbau bzw. ein Freilaufrad 214 und rückwärtige elektrisch antreibbare Radzusammenbauten 216 und 218 abstützt. Ein Mähwerk mit zwei Mähbalken, welches allgemein mit 220 bezeichnet wird, wird einstellbar durch den Rahmen 212 über eine konventionelle Mähwerksaushebvorrichtung (nicht gezeigt) zur Bewegung zwischen einer angehobenen Transportstellung und einer abgesenkten Mähstellung aufgenommen. Einstellbare Spurräder 222 und 224 stützen die vorderen Bereiche des Mähwerks 20. Wenn das Mähwerk 220 in seine Mähstellung abgesenkt ist, kann die Schnitthöhe eingestellt werden, indem die Mähwerksaushebungseinrichtung und die einstellbaren Spurräder 222 und 224 eingestellt werden.

Ein Verbrennungsmotor 230 ist auf dem Mähwerk 220 vorgesehen und weist eine vertikale Antriebswelle 234 auf, welche über eine elektrische Zapfwellenkupplung bzw. eine Kupplungseinrichtung 236 mit einem Riementrieb 238 in Verbindung steht. Ein Riemen 239 (Fig. 4) ist um eine Antriebsscheibe 240 geführt, welche zur Rotation um eine Achse 234a der Antriebswelle 234 verbunden ist. Der Riemen 239 ist ebenso um eine Riemenscheibe (nicht gezeigt) geführt, welche auf dem Mähwerk 220 angeordnet ist und gegenläufig rotierende, aufrechte Wellen 242 und 244 über einen konventionellen, synchronen Antrieb, welcher sich zwischen den Wellen 242 und 244 erstreckt, antreibt. Die Achsen der Wellen 234, 242 und 244 sind im wesentlichen parallel angeordnet und es sind geflügelte bzw. mit Flügeln versehene Mähbalken 246 und 247 an unteren Endbereichen der Wellen 242 und 244 zur Drehung um die entsprechenden Wellenachsen angeordnet. Alternativ könnte zwischen den Wellen 242, 244 ein nicht synchroner Keilriementrieb vorgesehen werden.

In einem oberen Motorgehäuse 248 ist ein elektrischer Generator 252, vorzugsweise eine Lichtmaschine bzw. ein Wechselstromgenerator, welcher durch den Verbrennungsmotor 230 angetrieben wird und mit einem Batteriepack, einer Batterie bzw. einer elektrischen Speichereinheit 254 (Fig. 3) über einen Spannungsregler (nicht gezeigt) in der oben mit Bezug auf Fig. 2 beschriebenen Art und Weise verbunden ist, angeordnet. Es ist ein elektrisches Antriebs- und Navigationssystem oder Lenksystem 260, welches im Wesentlichen mit dem Lenksystem 60 aus Fig. 2 übereinstimmt und oben für das Mähgerät 10 beschrieben ist, wobei die antreibbaren Radzusammenbauten 216 und 218 mit den angetriebenen Radzusammenbauten 16 und 18 aus Fig. 2 korrespondieren. Der Messerbremskupplungszusammenbau bzw. die Messerbremse 36 aus Fig. 2 wird durch die elektrische Kupplungseinrichtung 236 ersetzt, welche mit dem Steuerausgang 74 der Steuereinheit 70 verbunden ist. Das Lenksystem 260 wird hier nicht im Detail beschrieben werden und es wird auf Fig. 2 und die obenstehende Beschreibung für Details des elektrischen Antriebs und der Navigation Bezug genommen. Ein Puffer bzw. ein Berührungssensor, welcher allgemein mit 270 bezeichnet wird, ist ebenfalls an dem Mähgerät 210, welches in den Fig. 3 und 4 gezeigt wird, vorgesehen. Der Berührungssensor 270 liefert eine zusätzliche Eingabe an den Lenkkreis 72.

Ein Motorantrieb wird direkt an die geflügelten Mähbalken 246 und 247 über den Riementrieb 238 und den synchronen oder Keilriementrieb zwischen den Wellen 242 und 244 geliefert, während ein Antrieb des Mähgeräts 210 ausschließlich durch die elektrische Energiequelle 58 erfolgt. Die elektrischen Motoren 96 und 98 werden gesteuert, um eine Mähgeschwindigkeits-, Richtungs- und Lenksteuerung zu liefern. Wiederum können verschiedene Arten elektrischer Antriebs- und Navigationssysteme sowie verschiedene direkte Motorantriebe an die Schneideinheiten mit einem System entsprechend der vorliegenden Erfindung verwendet werden.

Nach der Beschreibung der bevorzugten Ausführungsform ist es offensichtlich, dass verschiedene Veränderungen durchgeführt werden können, ohne von dem Bereich der Erfindung, wie sie durch die folgenden Ansprüche beschrieben wird, abzuweichen.

## Patentansprüche

1. Mähgerät (10, 210), insbesondere Rasenmäher, mit einem Verbrennungsmotor (30, 130), einem Generator (50, 252), wenigstens einer Schneideinheit, und mehreren Rädern (14, 110, 112, 214, 216, 218), wobei die Schneideinheit und der Generator (50, 252) durch den Verbrennungsmotor (30, 130) und wenigstens ein Rad (110, 112, 216, 218) durch einen Elektromotor (96, 98) antreibbar ist, **dadurch gekennzeichnet, dass** der Generator (50, 152) elektrische Energie an zumindest eine elektrische Speichereinheit (54, 154) liefert, welche mit dem Elektromotor (96, 98) verbunden ist.

2. Mähgerät nach Anspruch 1, **dadurch gekennzeichnet, dass** die Schneideinheit in der Art eines Mähbalkens (40, 240) oder einer Mähspindel (40r) ausgeführt ist

3. Mähgerät nach einem oder mehreren der vorherigen Ansprüche, **dadurch gekennzeichnet, dass** der Verbrennungsmotor (30, 130) einen mit der Schneideinheit zusammenwirkende hydrostatischen Antrieb (38) antreibt.

4. Mähgerät nach einem oder mehreren der vorherigen Ansprüche, welches selbstständig arbeitet bzw. sich fortbewegt.

5. Mähgerät nach einem oder mehreren der vorherigen Ansprüche, **gekennzeichnet durch** eine Steuereinheit (70), welche zumindest mit dem Rad (110, 112, 216, 218) und der elektrischen Speichereinheit (54, 254) zusammenwirkt.

6. Mähgerät nach Anspruch 5, **dadurch gekennzeichnet**, das die Steuereinheit mit einem fernsteuerbaren und/oder selbsttätigen Lenksystem (60, 260) zusammenwirkt.

7. Mähgerät nach einem der Ansprüche 5 oder 6, **gekennzeichnet durch** mehrere antreibbare Räder (110, 112, 216, 218), welche **durch** die Steuereinheit (70) unabhängig voneinander gesteuert werden können.

8. Mähgerät nach einem oder mehreren der vorherigen Ansprüche, **dadurch gekennzeichnet, dass** die elektrische Speichereinheit (54, 254) durch eine Batterie bzw. durch einen Batteriepack gebildet wird.

9. Mähgerät nach einem oder mehreren der vorherigen Ansprüche, **gekennzeichnet durch** eine zwischen dem Verbrennungsmotor (30, 230) und der Schneideinheit wirksam angeordnete Kupplungseinrichtung (236).

10. Mähgerät nach Anspruch 9, **dadurch gekennzeichnet, dass** die Kupplungseinrichtung (236) durch die Steuereinheit (70) gesteuert werden kann.

11. Mähgerät nach einem oder mehreren der vorherigen Ansprüche, **gekennzeichnet durch** mehrere Schneideinheiten, welche mit dem Verbrennungsmotor (30, 230) über ein Getriebe, beispielsweise einen Riementrieb (238) in Verbindung stehen.

## Claims

1. Mowing apparatus (10, 210), especially a lawnmower, with an internal combustion engine (30, 230), a generator (50, 252), at least one cutter unit and a plurality of wheels (14, 110, 112, 214, 216, 218), wherein the cutter unit and the generator (50, 252) can be driven by the internal combustion engine (30, 230) and at least one wheel (110, 112, 216, 218) by an electric motor (96, 98), **characterized in that** the generator (50, 252) supplies electric power to at least one electric storage unit (54, 254) which is connected to the electric motor (96, 98).

2. Mowing apparatus according to claim 1, **characterized in that** the cutter unit is implemented as a cutter bar (40, 240) or a mower cylinder (40r).

3. Mowing apparatus according to one or more of the preceding claims, **characterized in that** the internal combustion engine (30, 230) drives a hydrostatic drive (38) cooperating with the cutter unit.

4. Mowing apparatus according to one or more of the preceding claims which operates or travels independently.

5. Mowing apparatus according to one or more of the preceding claims, **characterized by** a control unit (70) which cooperates at least with the wheel (110, 112, 216, 218) and the electric storage unit (54, 254).

6. Mowing apparatus according to claim 5, **characterized in that** the control unit cooperates with a remote controlled and/or automatic steering system (60, 260).

7. Mowing apparatus according to claim 5 or 6, **characterized by** a plurality of drivable wheels (110, 112, 216, 218) which can be controlled independently of each other by the control unit (70).

8. Mowing apparatus according to one or more of the preceding claims, **characterized in that** the electric storage unit (54, 254) is formed by a battery or a battery pack.

9. Mowing apparatus according to one or more of the preceding claims, **characterized by** a clutch device (236) arranged operatively between the internal combustion engine (30, 230) and the cutter unit.

10. Mowing apparatus according to claim 9, **characterized in that** the clutch device (236) can be controlled by the control unit (70).

11. Mowing apparatus according to one or more of the preceding claims, **characterized by** a plurality of cutter units which are coupled to the internal combustion engine (30, 230) through a transmission, for example a belt drive (238).

## Revendications

1. Tondeuse (10, 210), plus particulièrement tondeuse à gazon, comportant un moteur thermique (30, 230), un alternateur (50, 252), au moins une unité de coupe et plusieurs roues (14, 110, 112, 214, 216, 218), l'unité de coupe et l'alternateur (50, 252) étant actionnés par le moteur thermique (30, 230) et au moins une roue (110, 112, 216, 218) étant actionnée par un moteur électrique (96, 98), **caractérisée en ce que** l'alternateur (50, 252) fournit de l'énergie électrique à au moins un accumulateur d'énergie électrique (54, 254), qui est en liaison avec le moteur électrique (96, 98).

2. Tondeuse selon la revendication 1, **caractérisée en ce que** l'unité de coupe est conçue sous la forme d'une barre de coupe (40, 240) ou d'une hélice de coupe (40r).

3. Tondeuse selon une ou plusieurs des revendications précédentes,
**caractérisée en ce que** le moteur thermique (30, 230) actionne un entraînement hydrostatique (38) coopérant avec l'unité de coupe.

4. Tondeuse selon une ou plusieurs des revendications précédentes, qui travaille et se déplace de manière autonome.

5. Tondeuse selon une ou plusieurs des revendications précédentes, **caractérisée par** une unité de commande (70) qui coopère au moins avec la roue (110, 112, 216, 218) et l'accumulateur d'énergie électrique (54, 254).

6. Tondeuse selon la revendication 5, **caractérisée en ce que** l'unité de commande coopère avec un système de guidage (60, 260) télécommandé et/ou autonome.

7. Tondeuse selon la revendication 5 ou 6, **caractérisée par** plusieurs roues (110, 112, 216, 218) aptes à être actionnées et pouvant être commandées indépendamment les unes des autres par l'unité de commande (70).

8. Tondeuse selon une ou plusieurs des revendications précédentes, **caractérisée en ce que** l'accumulateur d'énergie électrique (54, 254) est formé par une batterie ou par un ensemble de batterie.

9. Tondeuse selon une ou plusieurs des revendications précédentes, **caractérisée par** une unité d'embrayage (236) agencée de manière active entre le moteur thermique (30, 230) et l'unité de coupe.

10. Tondeuse selon la revendication 9, **caractérisée en ce que** l'unité d'embrayage (236) peut être commandée par l'unité de commande (70).

11. Tondeuse selon une ou plusieurs des revendications précédentes, **caractérisée par** plusieurs unités de coupe, qui sont en liaison avec le moteur thermique (30, 230) par l'intermédiaire d'une transmission, telle qu'une transmission à courroie (238).
